# EUROPEAN PATENT APPLICATION

(11) **EP 4 847 575 A1**
(43) Date of publication of application: **02.12.2026**
(21) Application number: 25744854.8
(22) Date of filing: 20.01.2025
(51) Int. Cl.: C09J 7/21, B29B 15/12, B29C 65/02, B29C 65/50, B32B 5/28, B32B 17/04, B32B 17/10, C09J 7/35, C09J 201/00, D04H 3/14, D06M 15/39, D06M 15/59, D06M 15/513, B29K 105/08

(54) **THERMOPLASTIC ADHESIVE SHEET, METHOD FOR USING SAME, AND ADHESIVE STRUCTURE**

(30) Priority: 23.01.2024 JP 2024008301
(71) Applicant: Kuraray Co., Ltd., Kurashiki-shi, Okayama 710-0801 (JP)
(72) Inventor: GONDA, Kazuki, Kurashiki-shi, Okayama 713-8550 (JP); INOUE, Yuki, Tokyo 100-0004 (JP); KUMAGAI, Munenori, Kurashiki-shi, Okayama 713-8550 (JP); KATSUYA, Satoshi, Okayama-shi, Okayama 702-8601 (JP)
(74) Representative: Müller-Boré & Partner Patentanwälte PartG mbB
(86) International application number: PCT/JP2025/001555
(87) International publication number: WO 2025/159040

(57) **Abstract**

Provided is a thermoplastic adhesive sheet exhibiting high insulation properties and high shear adhesion strength. The thermoplastic adhesive sheet includes: a thermoplastic resin; and an insulating reinforcing-fiber sheet, the thermoplastic adhesive sheet having an adhesive surface that adheres by the action of the thermoplastic resin, wherein a volume ratio of the insulating reinforcing-fiber sheet relative to a total volume of the thermoplastic resin and the insulating reinforcing-fiber sheet is 2 to 50 vol%. For example, both surfaces of the thermoplastic adhesive sheet may be adhesive surfaces, and an exposure rate of the insulating reinforcing-fiber sheet on each of the adhesive surfaces may be less than 10%.

## Description

### CROSS REFERENCE TO THE RELATED APPLICATION

This application is based on and claims Convention priority to Japanese patent application No. 2024-008301, filed January 23, 2024, the entire disclosure of which is herein incorporated by reference as a part of this application.

### FIELD OF THE INVENTION

The present invention relates to a thermoplastic adhesive sheet including a thermoplastic resin and an insulating reinforcing-fiber sheet and having an adhesive surface to be bonded with the thermoplastic resin, to a method of using the same, and to an adhesive structure including the thermoplastic adhesive sheet and an adherend integrated in contact with at least a part of the adhesive surface.

### BACKGROUND ART

Conventionally, a motor having permanent magnets provided in a rotor or a stator has been used, and a method of fixing the permanent magnets by inserting them into holes thereof, filling a gap with a thermosetting resin such as an epoxy resin, and curing the resin to bond the magnets has been employed. However, when a thermosetting resin is used, a long curing time is required in order to increase the shear adhesion strength, resulting in a long cycle time in manufacturing. Furthermore, contact between the rotor or stator and the permanent magnets cannot be prevented, and thus it is necessary to subject the permanent magnets to an insulation treatment in order to ensure insulation properties (electrical insulation properties).

Therefore, in recent years, a sheet-shaped composite material containing insulating reinforcing fibers and a thermoplastic resin has been proposed as a fixing material. For example, Patent Document 1 (WO 2020/183945 A) discloses a space filling material including a resin and reinforcing fibers as an expansion material, the reinforcing fibers forming a plurality of intersections, and at least some of the intersections being bonded with the resin, wherein the space filling material is configured to generate an expansion stress upon heating such that the space filling material fills a predetermined space in at least a thickness direction., and the document describes that the space filling material is used as a molding material for fixing a permanent magnet.

Regarding a sheet-shaped composite material containing insulating reinforcing fibers and a thermoplastic resin, for example, Patent Document 2 (WO 2018/150978 A) discloses a resin-attached reinforcing-fiber fabric having a thermoplastic resin attached to at least one surface of a reinforcing-fiber fabric, wherein a weight per unit area W of the reinforcing-fiber fabric is in a range of 25 g/m² or more and 400 g/m² or less, an air permeability P of the reinforcing-fiber fabric is in a range of 0.1 cm³/cm²/s or more and 300 cm³/cm²/s or less, a melting point of the thermoplastic resin is in a range of 70°C or higher and 300°C or lower, a ratio of the mass of the reinforcing-fiber fabric to a total mass of the resin-attached reinforcing-fiber fabric is in a range of 20 mass% or more and 90 mass% or less, a coating rate C of the surface of the reinforcing-fiber fabric by the thermoplastic resin is in a range of 30% or more and less than 100%, and a resin adhesion coefficient A is in a range of 35 or more and 135 or less.

Patent Document 3 (JP Laid-open Patent Publication No. H8-207200) discloses a fiber-reinforced thermoplastic resin composite including a plurality of laminated glass fiber woven fabrics impregnated and integrated with a thermoplastic resin, in which a volume percentage of the glass fibers is 50 + 5%, a mass of the glass fiber woven fabrics laminated on a surface is 105 ± 2 g/m², and a mass ratio of warps/wefts is in a range of 1 ± 0.05.

Patent Document 4 (JP Laid-open Patent Publication No. H8-11133) discloses a sheet material for molding, which is a laminate including 2 to 24 sheets of mechanically cleaned glass woven fabric impregnated with a thermoplastic engineering plastic, wherein a volume of the glass fibers is 40% to 60% and a thickness thereof is 0.7 to 4 mm.

### RELATED DOCUMENT

### PATENT DOCUMENT

| | |
|---|---|
| [Patent Document 1] | WO 2020/183945 A |
| [Patent Document 2] | WO 2018/150978 A |
| [Patent Document 3] | JP Laid-open Patent Publication No.H8-207200 |
| [Patent Document 4] | JP Laid-open Patent Publication No.H8-11133 |

### SUMMARY OF THE INVENTION

### PROBLEMS TO BE SOLVED BY THE INVENTION

However, in recent years, demand for high-speed motors used in electric vehicles and the like has been increasing. In such high-speed motors, a method of fixing permanent magnets by pressing them with expansion stress, such as the space filling material described in Patent Document 1, provides insufficient fixing force.

Patent Documents 2 to 4 merely describe sheet-shaped composite materials used for manufacturing a molded article, and do not describe an application for bonding an adherend such as a permanent magnet.

Therefore, an object of the present invention is to provide a thermoplastic adhesive sheet exhibiting high insulation properties and high shear adhesion strength.

### MEANS FOR SOLVING THE PROBLEMS

As a result of intensive studies to solve the above problems, the inventors of the present invention have found that in a thermoplastic adhesive sheet having an adhesive surface to be bonded with a thermoplastic resin, containing an insulating reinforcing-fiber sheet at a specific volume ratio allows the thermoplastic adhesive sheet to exhibit high shear adhesion strength by bonding to an adherend, and to ensure insulation properties by suppressing contact as an insulating material for the adherend, thereby completing the present invention.

That is, the present invention may include the following aspects.

### [Aspect 1]

A thermoplastic adhesive sheet including a thermoplastic resin and an insulating reinforcing-fiber sheet, the thermoplastic adhesive sheet having an adhesive surface to be bonded with the thermoplastic resin, wherein a volume ratio of the insulating reinforcing-fiber sheet relative to a total volume of the thermoplastic resin and the insulating reinforcing-fiber sheet is 2 to 50 vol% (preferably 5 to 48 vol%, more preferably 10 to 45 vol%, still more preferably 13 to 40 vol%).

### [Aspect 2]

The thermoplastic adhesive sheet according to Aspect 1, wherein both surfaces of the thermoplastic adhesive sheet are adhesive surfaces, and an exposure rate of the insulating reinforcing-fiber sheet on each of the adhesive surfaces is less than 10% (preferably less than 5%, more preferably 2% or less, most preferably 0%).

### [Aspect 3]

The thermoplastic adhesive sheet according to Aspect 1 or 2, wherein the insulating reinforcing-fiber sheet is a glass fiber woven fabric.

### [Aspect 4]

The thermoplastic adhesive sheet according to any one of Aspects 1 to 3, wherein a thickness of the insulating reinforcing-fiber sheet is 10 to 150 µm (preferably 20 to 120 µm, more preferably 30 to 100 µm).

### [Aspect 5]

The thermoplastic adhesive sheet according to any one of Aspects 1 to 4, wherein a mass per unit area Mf of the insulating reinforcing-fiber sheet is 10 to 79 g/m² (preferably 12 to 75 g/m², more preferably 15 to 70 g/m²), and a theoretical thickness T represented by the following formula (1) is 20 to 150 µm (preferably 30 to 120 µm, more preferably 50 to 100 µm): $T = Mp / σp + Mf / σf$ (1) wherein T is the theoretical thickness [µm], Mp is a mass per unit area [g/m²] of the thermoplastic resin, op is a density [g/cm³] of the thermoplastic resin, Mf is a mass per unit area [g/m²] of the insulating reinforcing-fiber sheet, and of is a density [g/cm³] of the insulating reinforcing fiber.

### [Aspect 6]

The thermoplastic adhesive sheet according to any one of Aspects 1 to 5, wherein a glass transition temperature of the thermoplastic resin is 100°C or higher (preferably 120°C or higher, more preferably 150°C or higher).

### [Aspect 7]

The thermoplastic adhesive sheet according to any one of Aspects 1 to 6, wherein the thermoplastic resin is an amorphous thermoplastic resin.

### [Aspect 8]

The thermoplastic adhesive sheet according to any one of Aspects 1 to 7, wherein the thermoplastic resin is at least one thermoplastic resin selected from the group consisting of a polyetherimide-based resin, a polyether ether ketone-based resin, a phenoxy-based resin, and a polycarbonate-based resin.

### [Aspect 9]

An adhesive structure including: the thermoplastic adhesive sheet according to any one of Aspects 1 to 8; and an adherend integrated in contact with at least a part of the adhesive surface of the thermoplastic adhesive sheet.

### [Aspect 10]

A method of using the thermoplastic adhesive sheet according to any one of Aspects 1 to 8, the method including: interposing the thermoplastic adhesive sheet between adherends; and heating the thermoplastic adhesive sheet at a temperature equal to or higher than a softening point of the thermoplastic resin while applying a pressure in a stacking direction of the thermoplastic adhesive sheet from at least one of the adherends to bond the adherends to each other.

### [Aspect 11]

The use method according to Aspect 10, wherein one thermoplastic adhesive sheet is interposed between the adherends.

As used in the present specification, the singular forms "a", "an", and "the" are intended to include the plural forms including "at least one", unless the content clearly indicates otherwise. As used in the present specification, the terms "and/or", "at least one", and "one or more" include any and all combinations of the associated listed items.

Note that any combination of at least two components disclosed in the appended claims and/or the specification and/or the drawings is included in the present invention. In particular, any combination of two or more of the claims set forth in the appended claims is included in the present invention.

### EFFECT OF THE INVENTION

According to the thermoplastic adhesive sheet of the present invention, the thermoplastic adhesive sheet can bond to an adherend to exhibit high shear adhesion strength, and can ensure insulation properties for the adherend.

### BRIEF DESCRIPTION OF THE DRAWINGS

The present invention will be more clearly understood from the following description of preferred embodiments with reference to the appended drawings. The drawings are not necessarily to scale and are exaggerated in illustrating the principles of the present invention. However, the embodiment and drawings are merely illustrative and explanatory, and should not be utilized to define the scope of the present invention. The scope of the present invention is defined by the appended claims.
[Fig. 1A] Fig. 1A is a schematic cross-sectional view of a first embodiment of a method of using a thermoplastic adhesive sheet, illustrating a state before bonding.
[Fig. 1B] Fig. 1B is a schematic cross-sectional view of the first embodiment of the method of using a thermoplastic adhesive sheet, illustrating a state after bonding.
[Fig. 2A] Fig. 2A is a schematic cross-sectional view of a second embodiment of the method of using a thermoplastic adhesive sheet, illustrating a state before bonding.
[Fig. 2B] Fig. 2B is a schematic cross-sectional view of the second embodiment of the method of using a thermoplastic adhesive sheet, illustrating a state after bonding.

### DESCRIPTION OF EMBODIMENTS

### <Thermoplastic adhesive sheet>

A thermoplastic adhesive sheet includes a thermoplastic resin and an insulating reinforcing-fiber sheet, and has an adhesive surface to be bonded with the thermoplastic resin. In the thermoplastic adhesive sheet, the thermoplastic resin softens upon heating, making it possible to bond an adherend in contact with the adhesive surface. The adhesive surface refers to a surface mainly composed of the thermoplastic resin, and may be, for example, a surface where 50% or more of the entire area of the thermoplastic adhesive sheet is composed of a thermoplastic resin in plan view. Even when only one surface of the thermoplastic adhesive sheet is the adhesive surface, the thermoplastic resin can flow to the other surface (non-adhesive surface) depending on the configuration of the thermoplastic resin or the insulating reinforcing-fiber sheet, bonding conditions, or the like, to bond an adherend in contact with the non-adhesive surface.

In the thermoplastic adhesive sheet, the volume ratio of the insulating reinforcing-fiber sheet relative to the total volume of the thermoplastic resin and the insulating reinforcing-fiber sheet is 2 to 50 vol%. Presumably because when the insulating reinforcing-fiber sheet is included at such a specific volume ratio, both the shape retainability of the insulating reinforcing-fiber sheet and the adhesiveness of the thermoplastic resin can be achieved, the thermoplastic adhesive sheet can bond to an adherend to exhibit high shear adhesion strength when the adherend is bonded to the thermoplastic adhesive sheet. The insulating reinforcing-fiber sheet can act as an insulating material for the adherend, and can suppress contact with the adherend to secure insulation properties. When the volume ratio of the insulating reinforcing-fiber sheet is too small, since the shape retainability of the insulating reinforcing-fiber sheet may be insufficient, the thermoplastic resin may protrude from the adhesive surface at the time of bonding to contaminate the adherend, and furthermore, contact with the adherend may not be prevented, failing to secure insulation properties. On the other hand, when the volume ratio of the insulating reinforcing-fiber sheet is too large, since the contact area between the thermoplastic resin and the adherend may be insufficient, the shear adhesion strength at the time of bonding to the adherend is low, so that sufficient adhesiveness cannot be exhibited. The volume ratio of the insulating reinforcing-fiber sheet relative to the total volume of the thermoplastic resin and the insulating reinforcing-fiber sheet may be preferably 5 to 48 vol%, more preferably 10 to 45 vol%, and still more preferably 13 to 40 vol%.

Examples of the thermoplastic resin include: a vinyl-based resin (a polymer synthesized from a monomer having a vinyl group CH₂=CH- or a vinylidene group CH₂=C<, or a derivative thereof; a polyolefin-based resin such as polyethylene and polypropylene; an acrylic resin such as polymethyl methacrylate; polyvinyl chloride-based resin; a polystyrene-based resin, and the like; a polyamide-based resin such as an aliphatic polyamide-based resin (such as polyamide 6, polyamide 66, polyamide 11, polyamide 12, polyamide 610, and polyamide 612), a semi-aromatic polyamide-based resin, and a wholly aromatic polyamide-based resin; a polyester-based resin such as polyethylene terephthalate, polytrimethylene terephthalate, polybutylene terephthalate, and polyethylene naphthalate; a fluorine-based resin such as a polytetrafluoroethylene-based resin; a thermoplastic polyimide-based resin such as a semi-aromatic polyimide-based resin, a polyamideimide-based resin, and a polyetherimide-based resin; a polysulfone-based resin such as a polysulfone-based resin and a polyethersulfone-based resin; a polyphenylene sulfide-based resin; a modified polyphenylene ether resin; a polyether ketone-based resin such as a polyether ketone-based resin, a polyether ether ketone-based resin, and a polyether ketone ketone-based resin; a phenoxy-based resin; a polycarbonate-based resin; an amorphous polyarylate-based resin; and a liquid crystal polyester-based resin such as a wholly aromatic polyester-based resin. These thermoplastic resins may be used alone or in combination of two or more.

When the thermoplastic resin is used for an application requiring heat resistance, it is preferable to use a thermoplastic resin having a glass transition temperature of 100°C or higher, more preferably 120°C or higher, and still more preferably 150°C or higher. The upper limit is not particularly limited, but may be 300°C or lower from the viewpoint of bonding at a relatively low temperature. For example, the thermoplastic resin having the above-mentioned glass transition temperature may be selected from thermoplastic resins such as a semi-aromatic polyamide-based resin, a polytetrafluoroethylene-based resin, a thermoplastic polyimide-based resin, a polysulfone-based resin, a polyphenylene sulfide-based resin, a modified polyphenylene ether resin, a polyether ketone-based resin, a phenoxy-based resin, a polycarbonate-based resin, and an amorphous polyarylate-based resin. In the present specification, the glass transition temperature is a value as measured by the method described in Examples described later.

As the thermoplastic resin, an amorphous thermoplastic resin is preferably used from the viewpoint of adhesiveness. Examples of the amorphous thermoplastic resin include an acrylic resin, a polyvinyl chloride-based resin, a polystyrene-based resin, a thermoplastic polyimide-based resin, a polysulfone-based resin, a modified polyphenylene ether resin, a phenoxy-based resin, a polycarbonate-based resin, and an amorphous polyarylate-based resin. In the present specification, whether a resin is "amorphous" can be confirmed by the presence or absence of an endothermic peak in differential scanning calorimetry. When the endothermic peak is very broad and cannot be clearly determined, the resin may be determined to be substantially amorphous.

Among the thermoplastic resins, from the viewpoint of heat resistance and adhesiveness, at least one thermoplastic resin selected from the group consisting of a polyetherimide-based resin, a polyether ether ketone-based resin, a phenoxy-based resin, and a polycarbonate-based resin is preferable. From the viewpoint of heat resistance and the viewpoint of adhesiveness when a metal material is used as the adherend, a polyetherimide-based resin is more preferable.

The thermoplastic resin may contain various additives as long as the effect of the present invention is not impaired.

The form of the thermoplastic resin in the thermoplastic adhesive sheet is not particularly limited. For example, the thermoplastic resin may be layered on the insulating reinforcing-fiber sheet in the form of a sheet (thermoplastic resin sheet) such as a fabric, e.g., a woven fabric, a knitted fabric, and a nonwoven fabric, or a film, and in this case, the thermoplastic resin sheet may constitute the adhesive surface. In the case of an application where the insulating reinforcing-fiber sheet is inserted into a narrow portion to be bonded, at least a part of the thermoplastic resin may be impregnated as a matrix resin into the insulating reinforcing-fiber sheet. For example, the thermoplastic adhesive sheet may include a form-retaining layer in which the insulating reinforcing-fiber sheet is impregnated with a thermoplastic resin, and an adhesive layer containing a thermoplastic resin present as an outermost layer on at least one surface of the form-retaining layer.

The insulating reinforcing-fiber sheet includes insulating reinforcing fibers, and the insulating reinforcing fibers may be inorganic fibers or organic fibers. Examples of the inorganic fibers include glass fibers, silicon nitride fibers, silica fibers, and alumina fibers. The organic fibers are not particularly limited as long as the glass transition temperature or the melting point is higher than the softening point of the thermoplastic resin, and examples thereof include liquid crystal polyester-based fibers, wholly aromatic polyamide-based fibers (aramid fibers), polybenzazole-based fibers, polyimide-based fibers, and polyphenylene sulfide-based fibers. In the present specification, the softening point mainly means a thermal deformation temperature, and may be, for example, a deflection temperature under load (JIS K 7207). In particular, in the case of an amorphous thermoplastic resin, the softening point means its glass transition temperature. Among them, the insulating reinforcing fibers are preferably inorganic fibers from the viewpoint of excellent heat resistance. From the viewpoint of adhesiveness, glass fiber is more preferable.

The insulating reinforcing fibers are preferably long fibers from the viewpoint of suppressing expansion of the thermoplastic adhesive sheet during heating and from the viewpoint of securing insulation properties. In the present specification, long fibers refer to fibers that are continuous to some extent, and can be distinguished from short fibers intentionally cut into a predetermined fiber length. For example, the long fibers may be continuous fibers having a fiber length of 50 mm or more.

Examples of the insulating reinforcing-fiber sheet include woven fabrics, knitted fabrics, braided fabrics, and nonwoven fabrics. From the viewpoint of suppressing the expansion of the thermoplastic adhesive sheet, an insulating reinforcing-fiber fabric is preferable, and from the viewpoint of adhesiveness, a glass fiber woven fabric is more preferable. Examples of the weave structure of the insulating reinforcing-fiber fabric include plain weave, satin weave, and twill weave, and plain weave is preferable from the viewpoint of thickness uniformity.

From the viewpoint of shape retainability and insulation properties and from the viewpoint of insertability into a narrow portion, the thickness of the insulating reinforcing-fiber sheet may be 10 to 150 µm, preferably 20 to 120 µm, and more preferably 30 to 100 µm. In the present specification, the thickness of the insulating reinforcing-fiber sheet refers to the total thickness when a plurality of insulating reinforcing-fiber sheets are stacked, and is a value as measured by the method described in Examples described later.

The mass per unit area Mf of the insulating reinforcing-fiber sheet may be 10 to 79 g/m², preferably 12 to 75 g/m², and more preferably 15 to 70 g/m². In the present specification, the mass per unit area (basis weight) is a value as measured by the method described in Examples described later.

A known surface treatment agent may be attached to the surface of the insulating reinforcing-fiber sheet in order to improve adhesiveness to the thermoplastic resin. For example, when the insulating reinforcing fibers are inorganic fibers (for example, glass fibers), a silane coupling agent may be attached to the surface of the insulating reinforcing-fiber sheet. As the silane coupling agent, a known silane coupling agent can be used, and examples thereof include epoxysilane, vinylsilane, aminosilane, chlorosilane, mercaptosilane, (meth)acrylsilane, and cationic silane.

When the adherend is a metal material, the thermoplastic adhesive sheet is preferably a combination of a polyetherimide-based resin as the thermoplastic resin and a glass fiber woven fabric as the insulating reinforcing-fiber sheet. Since the polyetherimide-based resin has good adhesiveness to a metal material and also has good adhesiveness to glass fibers, the shear adhesion strength can be improved when a metal material as the adherend is bonded to the thermoplastic adhesive sheet.

Both surfaces of the thermoplastic adhesive sheet may be adhesive surfaces. When both surfaces are adhesive surfaces, adherends can be bonded with the thermoplastic adhesive sheet interposed therebetween, thereby exhibiting high shear adhesion strength. The thermoplastic adhesive sheet can also suppress contact between the adherends, thereby ensuring insulation properties. For example, the thermoplastic adhesive sheet may include a form-retaining layer in which the insulating reinforcing-fiber sheet is impregnated with a thermoplastic resin, and an adhesive layer containing a thermoplastic resin present as an outermost layer on both surfaces of the form-retaining layer.

When both surfaces of the thermoplastic adhesive sheet are adhesive surfaces, the exposure rate of the insulating reinforcing-fiber sheet on each of the adhesive surfaces may be preferably less than 10%, more preferably less than 5%, still more preferably 2% or less, and most preferably 0%, from the viewpoint of suppressing warpage of the sheet and the viewpoint of insertability into a narrow portion. By reducing the exposure rate of the insulating reinforcing-fiber sheet on the adhesive surface of the thermoplastic adhesive sheet, the formation of irregularities due to the surface shape of the insulating reinforcing-fiber sheet can be suppressed, thereby reducing surface frictional resistance and facilitating insertion into a narrow portion. In a case where the volume ratio of the insulating reinforcing-fiber sheet is relatively small, warpage tends to occur in the thermoplastic adhesive sheet when the exposure rate of the insulating reinforcing-fiber sheet is large. However, by reducing the exposure rate of the insulating reinforcing-fiber sheet on both adhesive surfaces, the occurrence of warpage can be suppressed in the thermoplastic adhesive sheet, and the handleability thereof can be improved. In the present specification, the exposure rate of the insulating reinforcing-fiber sheet refers to the ratio of the area occupied by the insulating reinforcing-fiber sheet to the total area on the surface of the thermoplastic adhesive sheet, and is a value as measured by the method described in Examples described later.

From the viewpoint of inserting the thermoplastic adhesive sheet into a narrow portion (for example, a gap of about 50 to 5000 µm) and bonding the adherend with high accuracy, the theoretical thickness T represented by the following formula (1) may be 20 to 150 µm, preferably 30 to 120 µm, and more preferably 50 to 100 µm. $T = Mp / σp + Mf / σf$ (1) wherein T is the theoretical thickness [µm], Mp is the mass per unit area [g/m²] of the thermoplastic resin, σp is the density [g/cm³] of the thermoplastic resin, Mf is the mass per unit area [g/m²] of the insulating reinforcing-fiber sheet, and σf is the density [g/cm³] of the insulating reinforcing fiber.

The thermoplastic adhesive sheet preferably has low expansibility during heating from the viewpoint of adhesiveness. If the expansibility is high, when the thermoplastic adhesive sheet is heated and bonded to an adherend, voids may be generated in the thermoplastic adhesive sheet due to the expansion, which may reduce the shear adhesion strength. For example, the maximum expansion coefficient in the thickness direction of the thermoplastic adhesive sheet may be 50% or less, preferably 20% or less, more preferably 10% or less, and still more preferably 1% or less. In the present specification, the maximum expansion coefficient in the thickness direction indicates an expansion coefficient when heating is performed at a temperature equal to or higher than the softening point of the thermoplastic resin under no pressure for 10 minutes, and the expansion coefficient is determined based on the thicknesses of the thermoplastic adhesive sheet before and after heating, according to the following formula: thickness of the thermoplastic adhesive sheet after heating / thickness of the thermoplastic adhesive sheet before heating × 100.

From the viewpoint of adhesiveness, the thermoplastic adhesive sheet preferably does not substantially contain a binder component that may be used in the production of the thermoplastic resin sheet or the insulating reinforcing-fiber sheet, and for example, the content of the binder component in the thermoplastic adhesive sheet may be 1 wt% or less. For example, when the thermoplastic adhesive sheet contains the thermoplastic resin in the form of a fabric, or when the insulating reinforcing-fiber sheet is impregnated with the resin by hot pressing or the like using such a fabric as a precursor, it is preferable to use a fabric (for example, a spunbonded nonwoven fabric, a melt-blown nonwoven fabric, or the like) that can be formed without using a binder component. In the insulating reinforcing-fiber sheet, a sizing agent including a binder component or the like may be used in the production process, but it is preferable that the insulating reinforcing-fiber sheet be washed to remove the binder in a subsequent process. Examples of the binder component include a polyolefin-based resin, a polyamide-based resin, a polyester-based resin, an acrylic resin, a polyvinyl alcohol-based resin, and a polyurethane-based resin.

The shear adhesion strength of the thermoplastic adhesive sheet as measured by a method described in Examples described later may be 19 MPa or more, preferably 20 MPa or more, more preferably 23 MPa or more, and still more preferably 25 MPa or more. The upper limit of the shear adhesion strength is not particularly limited, but may be, for example, 50 MPa or less.

From the viewpoint of insertability into a narrow portion, the scratch load of the thermoplastic adhesive sheet as measured by a method described in Examples described later may be 80 g or more, preferably 100 g or more, and more preferably 200 g or more. The upper limit of the scratch load is not particularly limited, but may be, for example, 500 g or less.

Examples of the method of producing a thermoplastic adhesive sheet include, in the case of forming a layered sheet of a thermoplastic resin sheet and an insulating reinforcing-fiber sheet, a method of superimposing a thermoplastic resin sheet and an insulating reinforcing-fiber sheet, and a method of applying a thermoplastic resin to an insulating reinforcing-fiber sheet. For example, from the viewpoint that the volume ratio of the insulating reinforcing-fiber sheet can be easily adjusted, the method of producing a thermoplastic adhesive sheet may include a step of stacking a thermoplastic resin sheet and an insulating reinforcing-fiber sheet. The thermoplastic resin sheet may be a sheet made of the thermoplastic resin, and examples of the sheet shape include a fabric such as a woven fabric, a knitted fabric, and a nonwoven fabric, and a film. From the viewpoint of not containing a binder component, the thermoplastic resin sheet is preferably a binder-free fabric (for example, a spunbonded nonwoven fabric, a melt-blown nonwoven fabric, or the like) or a film. From the viewpoint of uniformity, shapability, and impregnation property of the thermoplastic resin sheet into the insulating reinforcing-fiber sheet, the thermoplastic resin sheet is more preferably a melt-blown nonwoven fabric. The insulating reinforcing-fiber sheet may be a fiber sheet formed of the insulating reinforcing fibers, and examples of the fiber sheet shape include a woven fabric, a knitted fabric, a braided fabric, and a nonwoven fabric. The insulating reinforcing-fiber sheet is preferably an insulating reinforcing-fiber fabric from the viewpoint of suppressing expansion of the thermoplastic adhesive sheet to be obtained.

As long as the adhesive surface can be formed and the volume ratio of the insulating reinforcing-fiber sheet can be adjusted, the configuration of a layered sheet of a thermoplastic resin sheet and an insulating reinforcing-fiber sheet obtained by a stacking step is not limited, and the layered sheet may include one or more thermoplastic resin sheets and one or more insulating reinforcing-fiber sheets. For example, from the viewpoint of forming an adhesive surface, it is preferable that the thermoplastic resin sheet is included so as to be at least one outermost layer. From the viewpoint of forming both surfaces of the thermoplastic adhesive sheet as adhesive surfaces, it is preferable that the thermoplastic resin sheet is included so as to be both outermost layers. For example, as a layered sheet of a thermoplastic resin sheet and an insulating reinforcing-fiber sheet obtained by the stacking step, one or more thermoplastic resin sheets / one or more insulating reinforcing-fiber sheets / one or more thermoplastic resin sheets may be stacked in this order. In this case, the first thermoplastic resin sheet(s) and the second thermoplastic resin sheet(s) may be made of the same type of thermoplastic resin, or may be made of different types of thermoplastic resins, but are preferably made of the same type of thermoplastic resin from the viewpoint of adhesiveness.

The thermoplastic adhesive sheet may be a layered sheet of a thermoplastic resin sheet and an insulating reinforcing-fiber sheet obtained in the stacking step. However, in the case of forming a sheet in which the insulating reinforcing-fiber sheet is impregnated with at least a part of the thermoplastic resin, examples of the method of producing a thermoplastic adhesive sheet include a method of hot-pressing the layered sheet to soften and flow the thermoplastic resin sheet and impregnate the insulating reinforcing-fiber sheet with the thermoplastic resin, and a method of immersing the insulating reinforcing-fiber sheet in a molten thermoplastic resin. For example, from the viewpoint of reducing the exposure rate of the insulating reinforcing-fiber sheet, the method of producing a thermoplastic adhesive sheet may include a step of heating a layered sheet of a thermoplastic resin sheet and an insulating reinforcing-fiber sheet to a temperature equal to or higher than a softening point of the thermoplastic resin, and applying a pressure in the thickness direction to hot-press the layered sheet. By adjusting conditions such as the volume ratio between the thermoplastic resin sheet and the insulating reinforcing-fiber sheet, the layering configuration of the layered sheet, and the temperature, pressure, and time of hot pressing, it is possible to form an adhesive surface formed of a thermoplastic resin matrix and having a reduced exposure rate of the insulating reinforcing-fiber sheet.

The heating temperature in the hot pressing may be set in accordance with the softening point and decomposition temperature of the thermoplastic resin to be used, and is preferably equal to or higher than the softening point of the thermoplastic resin. For example, when the thermoplastic resin is crystalline, the heating temperature is preferably in the range of the melting point of the thermoplastic resin or higher and a temperature of (melting point + 100)°C or lower. When the thermoplastic resin is amorphous, the heating temperature is preferably in the range of the glass transition temperature of the thermoplastic resin or higher and a temperature of (glass transition temperature + 200)°C or lower.

The pressure at the time of hot pressing is not particularly limited, and may be, for example, 0.01 MPa or more, preferably 1 MPa or more, and more preferably 5 MPa or more. The upper limit is not particularly limited, but may be, for example, about 20 MPa. The time for hot pressing is also not particularly limited. However, since exposure to a high temperature for a long time may deteriorate the thermoplastic resin or cause the thermoplastic resin to flow, it is preferable to perform hot pressing in a relatively short time, such as within 10 minutes, preferably within 1 minute, and more preferably within 30 seconds. The lower limit thereof is not particularly limited, but may be, for example, about 0.1 seconds.

### <Adherend>

The adherend is not particularly limited as long as the softening temperature is higher than that of the thermoplastic resin of the thermoplastic adhesive sheet, and may be, for example, an inorganic material, a fiber-reinforced thermosetting resin, or a fiber-reinforced thermoplastic resin. In particular, from the viewpoint of protection from heat at the time of bonding, the adherend may be an inorganic material, and more preferably may be a metal material.

### <Adhesive structure>

An adhesive structure may include a thermoplastic adhesive sheet, and an adherend integrated in contact with at least a part of the adhesive surface of the thermoplastic adhesive sheet. In the adhesive structure, the thermoplastic adhesive sheet and the adherend can be handled integrally, and the adhesive structure can be used for bonding the adherend to another adherend. For example, they can be integrally inserted into a narrow portion to bond and fix the adherend to the narrow portion.

The adhesive structure can be produced, for example, by bringing an adherend into contact with at least a part of an adhesive surface of the thermoplastic adhesive sheet, and heating the thermoplastic adhesive sheet at a temperature equal to or higher than the softening point of the thermoplastic resin to soften the thermoplastic resin, thereby bonding the adherend. The adhesive structure can also be produced by stacking a thermoplastic resin sheet and an insulating reinforcing-fiber sheet for forming a thermoplastic adhesive sheet so that the thermoplastic resin sheet and an adherend are in contact with each other, heating the thermoplastic resin sheet at a temperature equal to or higher than the softening point of the thermoplastic resin to soften the thermoplastic resin, thereby bonding the adherend and impregnating the insulating reinforcing-fiber sheet with the thermoplastic resin. When the adherend is bonded, the bonding may be performed by heating while applying a pressure in a direction in which the adhesive surface and the adherend are in contact with each other.

In the adhesive structure, another adherend may be bonded to the adhesive surface on the side opposite to the adhesive surface of the thermoplastic adhesive sheet in which the adherend is integrated. Alternatively, when the adherend is integrated with a part of the adhesive surface of the thermoplastic adhesive sheet, another adherend may be bonded to another part of the same adhesive surface of the thermoplastic adhesive sheet where the adherend is not integrated.

### <Method of using thermoplastic adhesive sheet>

With the thermoplastic adhesive sheet, an adherend can be bonded by bringing the adherend into contact with at least a part of an adhesive surface of the thermoplastic adhesive sheet, and heating the thermoplastic adhesive sheet at a temperature equal to or higher than the softening point of the thermoplastic resin to soften the thermoplastic resin. Even when one surface of the thermoplastic adhesive sheet is an adhesive surface and the other surface is a non-adhesive surface, the thermoplastic resin can flow to the non-adhesive surface depending on the configuration of the thermoplastic resin or the insulating reinforcing-fiber sheet, the bonding conditions, and the like, thereby bonding the adherend in contact with the non-adhesive surface.

The thermoplastic adhesive sheet can bond adherends to each other. For example, each adherend may be bonded to a separate surface of the thermoplastic adhesive sheet, or each adherend may be bonded to a different portion of the same surface of the thermoplastic adhesive sheet. Regarding the insulating reinforcing-fiber sheet, it is preferable to bond each adherend to a separate surface of the thermoplastic adhesive sheet, since the insulation property can be secured by the insulating reinforcing-fiber sheet.

In a method of using a thermoplastic adhesive sheet, the thermoplastic adhesive sheet may be interposed between adherends, and the thermoplastic adhesive sheet may be heated at a temperature equal to or higher than the softening point of the thermoplastic resin while applying a pressure in a stacking direction of the thermoplastic adhesive sheet from at least one of the adherends to bond the adherends to each other.

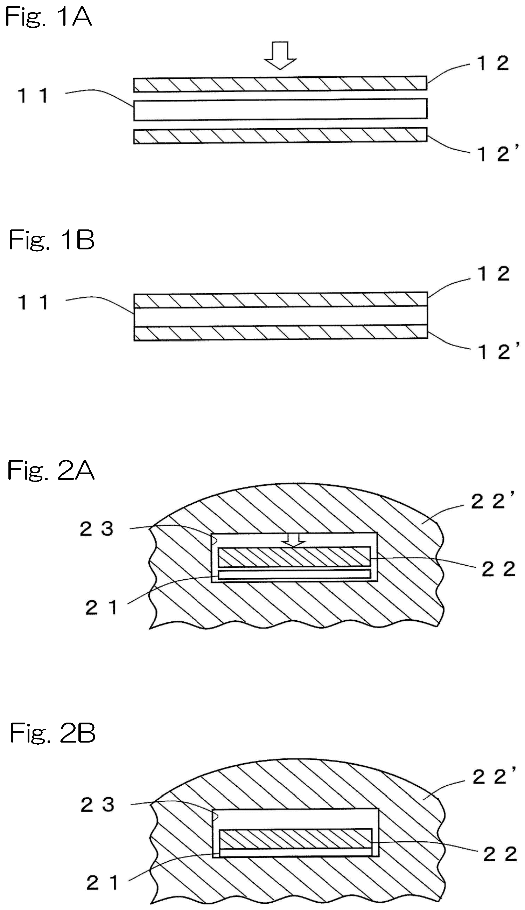

For example, the description will be given on the basis of Figs. 1A and 1B, which illustrate schematic cross-sectional views of a first embodiment of the method of using a thermoplastic adhesive sheet. Fig. 1A illustrates a state before bonding in which a thermoplastic adhesive sheet 11 is interposed between sheet-shaped adherends 12 and 12'. Fig. 1B illustrates a state in which the adherends 12 and 12' are bonded to each other with the thermoplastic adhesive sheet 11 interposed therebetween.

In Fig. 1A, the adherend 12, the thermoplastic adhesive sheet 11, and the adherend 12' are stacked in this order, and heated to a temperature equal to or higher than the softening point of the thermoplastic resin in the thermoplastic adhesive sheet 11 while applying a pressure in the stacking direction (arrow direction in Fig. 1A) from one adherend 12 side. Heating at a temperature equal to or higher than the softening point of the thermoplastic resin softens the thermoplastic resin, so that bonding can be performed between the adherend 12 and the thermoplastic adhesive sheet 11 and between the thermoplastic adhesive sheet 11 and the adherend 12' in a pressed state under pressure. As a result, the adherends 12 and 12' can be bonded to each other, and the contact between the adherends 12 and 12' can be suppressed by interposing the thermoplastic adhesive sheet 11, thereby securing the insulation properties.

The adherends 12 and 12' may be bonded to the thermoplastic adhesive sheet 11 at the same time. Alternatively, the adherend 12 and the thermoplastic adhesive sheet 11 may be bonded by heating and pressurizing to form an adhesive structure, and then, the adhesive structure and the adherend 12' may be heated and pressurized to bond the adherend 12' and the thermoplastic adhesive sheet 11.

As a method of heating and pressurizing at the time of bonding, a known method can be used, and examples thereof include hot pressing in which pressure is applied with a heated press plate and a method of applying a load in a heating atmosphere such as a heating furnace. Pressure may be simultaneously applied not only from the adherend 12 side but also from the adherend 12' side depending on the configuration of the adherend 12' and the like.

The heating temperature is not particularly limited as long as there is no problem with the heat resistance of the adherends 12 and 12'. For example, with reference to the softening point of the thermoplastic resin, the heating temperature may be (softening point + 10)°C or higher, preferably (softening point + 30)°C or higher, and more preferably (softening point + 50)°C or higher. The upper limit of the heating temperature may be, for example, (softening point + 250)°C or lower, and preferably (softening point + 200)°C or lower, and is more preferably (softening point + 150)°C or lower particularly from the viewpoint of suppressing deterioration of the thermoplastic resin.

The pressure is not particularly limited as long as bonding is possible, and may be, for example, 0.001 MPa or more, preferably 0.01 MPa or more, and more preferably 0.1 MPa or more. The upper limit is not particularly limited, but may be, for example, about 20 MPa, and the pressure is desirably such that the thermoplastic resin does not protrude from the gap between the adherends. The time for hot pressing is also not particularly limited and may be, for example, 1 hour or less. However, since exposure to a high temperature for a long time may deteriorate the thermoplastic resin or cause the thermoplastic resin to flow, it is preferable to perform hot pressing in a relatively short time, such as within 30 minutes, preferably within 15 minutes, and more preferably within 10 minutes. The lower limit is not particularly limited, but may be, for example, about 1 minute.

One adherend may form a hole, and a thermoplastic adhesive sheet may be used to fix the other adherend to the hole. For example, the description will be given on the basis of Figs. 2A and 2B, which illustrate schematic cross-sectional views of a second embodiment of the method of using a thermoplastic adhesive sheet. Fig. 2A illustrates a state before bonding in which a thermoplastic adhesive sheet 21 and an adherend 22 are inserted into a hole 23 of an adherend 22', with the thermoplastic adhesive sheet 21 interposed between the adherends 22 and 22'. Fig. 2B illustrates a state in which the adherends 22 and 22' are bonded to each other with the thermoplastic adhesive sheet 21 interposed therebetween to fix the adherend 22 in the hole 23 of the adherend 22'. In Fig. 2A, the hole 23 is formed so as to be entirely surrounded, but the hole does not need to be a closed space in which the hole is entirely surrounded, and for example, may be partially open like a U-shape. Fig. 2A illustrates a part of the adherend 22'.

In Fig. 2A, the thermoplastic adhesive sheet 21 and the adherend 22 are inserted into the hole 23 of the adherend 22', and they are stacked such that the thermoplastic adhesive sheet 21 is in contact with the surface of the adherend 22' forming the hole 23 and the adherend 22. The thermoplastic adhesive sheet is then heated to a temperature equal to or higher than the softening point of the thermoplastic resin in the thermoplastic adhesive sheet 21 while applying a pressure in the stacking direction (arrow direction in Fig. 2A) from the adherend 22 side. Heating at a temperature equal to or higher than the softening point of the thermoplastic resin softens the thermoplastic resin, so that bonding can be performed between the adherend 22 and the thermoplastic adhesive sheet 21 and between the thermoplastic adhesive sheet 21 and the adherend 22' in a pressed state under pressure. As a result, the adherend 22 can be fixed in the hole 23 of the adherend 22', and the contact between the adherends 22 and 22' can be suppressed by interposing the thermoplastic adhesive sheet 21, thereby securing the insulation properties.

When the thermoplastic adhesive sheet 21 and the adherend 22 are inserted into the hole 23 of the adherend 22', the thermoplastic adhesive sheet 21 and the adherend 22 may be inserted separately or simultaneously in a state where they are not bonded, or may be inserted as an adhesive structure in which the thermoplastic adhesive sheet 21 and the adherend 22 are bonded. When the hole 23 is a narrow portion, an adhesive structure in which the thermoplastic adhesive sheet 21 and the adherend 22 are integrated is preferable.

One or more thermoplastic adhesive sheets 21 may be used. However, when the hole 23 is a narrow portion, one thermoplastic adhesive sheet 21 is preferably interposed between the adherends 22 and 22'.

Examples of the pressurization method include a method of applying a load from the adherend 22 side. In particular, when the hole 23 is a narrow portion, an expandable sheet may be inserted between the side of the adherend 22 opposite to the thermoplastic adhesive sheet 21 and the surface of the adherend 22' forming the hole 23, so that pressure is applied by expansion stress. Examples of the expandable sheet include a composite sheet which is formed of reinforcing fibers and a resin, and expands due to a repulsive force generated by the reinforcing fibers when the resin is softened by heating. Such an expandable sheet that expands by heating can be expanded simultaneously with bonding of the thermoplastic adhesive sheet by heating to apply pressure, and thus can be suitably used.

The thermoplastic adhesive sheet can be suitably used as an insulating adhesive that can insulate and bond adherends in transportation means, home electric appliances, industrial machines, buildings, and the like. The thermoplastic adhesive sheet can have heat resistance according to the configuration of the thermoplastic resin and the insulating reinforcing-fiber sheet, and thus can be suitably used as a heat-resistant adhesive.

For example, in a motor (such as a motor for driving an automobile), by using the thermoplastic adhesive sheet as a fixing material for bonding and fixing permanent magnets in a plurality of holes or recesses formed in a rotor or a stator, the permanent magnets can be fixed with sufficient adhesive strength, and insulation properties can be imparted.

Examples of the motor using permanent magnets in a rotor include an interior permanent magnet motor (IPM motor) and a surface permanent magnet motor (SPM motor). In the SPM motor, a permanent magnet is fixed in each recess of the rotor surface, and in the IPM motor, a permanent magnet is fixed in each hole of the rotor. Since the thermoplastic adhesive sheet has excellent adhesiveness, the thermoplastic adhesive sheet can be more preferably used for an IPM motor useful for high-speed rotation.

### EXAMPLES

Hereinafter, the present invention will be described in more detail based on Examples, but the present invention is not limited thereto at all. In Examples and Comparative Examples below, various physical properties were measured by the following methods.

### [Glass transition temperature (Tg) of thermoplastic resin]

The glass transition temperature of the thermoplastic resin was determined from the peak temperature by measuring the temperature dependence of the loss tangent (tanδ) at a frequency of 10 Hz and a temperature rise rate of 10°C/min using a solid dynamic viscoelasticity apparatus "Rheospectra DVE-V4" manufactured by Rheology Co., Ltd. Here, the peak temperature of tanδ is a temperature at which the first differential value of the amount of change in the tanδ value with respect to temperature becomes zero.

### [Basis weights of thermoplastic resin sheet and insulating reinforcing-fiber sheet]

Samples of a thermoplastic resin sheet and an insulating reinforcing-fiber sheet having a length of 250 mm and a width of 250 mm were cut into 80 small pieces having a length of 50 mm and a width of 15 mm. The weights (g) of all the small pieces were measured, and the basis weights (g/m²) were calculated. The average value of the basis weights of all the small pieces was taken as the basis weight (g/m²) of each sample.

### [Thickness of insulating reinforcing-fiber sheet]

A sample of an insulating reinforcing-fiber sheet having a length of 250 mm and a width of 250 mm was cut into 80 small pieces having a length of 50 mm and a width of 15 mm. The thickness (µm) was measured at the center of each small piece with a high precision digimatic micrometer "MDH-25MB" manufactured by Mitutoyo Corporation, and the average value of the thicknesses of all the small pieces was taken as the thickness (µm) of the insulating reinforcing-fiber sheet.

### [Densities of thermoplastic resin and insulating reinforcing fiber]

The densities of the thermoplastic resin and the insulating reinforcing fiber were determined by measuring the density of each sample under an environment of 25°C by the underwater substitution method using a densimeter "ELECTRONIC DENSIMETER SD-200L" manufactured by Alfa Mirage Co., Ltd. The measurement with 10 g of the sample was repeated 5 times, and the average value thereof was taken as the density (g/cm³) of each sample.

### [Volume ratio of insulating reinforcing-fiber sheet]

The volume ratio of the insulating reinforcing-fiber sheet relative to the total volume of the thermoplastic resin and the insulating reinforcing-fiber sheet constituting the thermoplastic adhesive sheet was calculated by converting the weight ratio using the respective densities.

### [Theoretical thickness of thermoplastic adhesive sheet]

From the basis weight (mass per unit area) of the insulating reinforcing-fiber sheet, the volume ratio of the insulating reinforcing-fiber sheet, and the density of the insulating reinforcing fiber which had been measured above, the theoretical thickness (µm) of the thermoplastic adhesive sheet was calculated using the following formula. $T = Mp / σp + Mf / σf$ wherein T is the theoretical thickness [µm], Mp is the mass per unit area [g/m²] of the thermoplastic resin, σp is the density [g/cm³] of the thermoplastic resin, Mf is the mass per unit area [g/m²] of the insulating reinforcing-fiber sheet, and σf is the density [g/cm³] of the insulating reinforcing fiber.

### [Exposure rate of insulating reinforcing-fiber sheet]

Using a laser microscope ("VK-X3000" manufactured by KEYENCE CORPORATION), planar view images of each thermoplastic adhesive sheet sample in plan view were photographed at a magnification of 10 times at 20 different positions on each of the front and back surfaces. Using the binarization function of the image analysis software "ImageJ", the ratio of the area occupied by the insulating reinforcing fiber portion to the total area was measured in each image on each surface, and the average value of the 20 images was taken as the exposure rate.

### [Shear adhesion strength]

The shear adhesion strength of the thermoplastic adhesive sheet with an iron test piece was measured with reference to JIS K 6850 "Adhesives - Determination of tensile lap-shear strength of rigid-to-rigid bonded assemblies". Two iron test pieces (SPCC-SD manufactured by Standard Test Piece; thickness: 1.6 mm, length: 100 mm, width: 25 mm) were prepared. A thermoplastic adhesive sheet cut to a length of 10 mm and a width of 25 mm was disposed on an area (10 mm in the length direction and 25 mm in the width direction) at an end portion of one of the iron test pieces. Using a test press machine ("KVHC-II" manufactured by Kitagawa Seiki Co., Ltd.), pressing was performed at a predetermined temperature under conditions of 2 MPa and 1 minute to bond the iron test piece to one surface of the thermoplastic adhesive sheet. Then, the other iron test piece was overlapped on the other surface of the thermoplastic adhesive sheet such that an area (10 mm in the length direction and 25 mm in the width direction) at an end portion thereof was aligned with the thermoplastic adhesive sheet, and was held at a predetermined temperature for 10 minutes in a hot air furnace in a state where a load of 0.04 MPa was applied, thereby preparing a sample for measuring shear adhesion strength. With respect to the obtained sample for measuring shear adhesion strength, each iron test piece was gripped and pulled at a tensile rate of 1 mm/min using a tensile tester ("AG-5000B" manufactured by Shimadzu Corporation), and the shear adhesion strength (MPa) was measured from the load at the time of breaking. The measurement was performed five times, and the average value thereof was calculated.

### [Insulation properties]

With respect to the sample for measuring shear adhesion strength, before the measurement of the shear adhesion strength, probes of a tester ("HiTESTER 3244-60" manufactured by HIOKI E.E. CORPORATION) were brought into contact with the upper and lower iron test pieces, respectively, at the center in the width direction and a position 10 mm from the end in the length direction thereof, to measure the resistance value. When the resistance value was equal to or greater than the detection upper limit (42 MΩ), the insulation properties were evaluated as A, and when the resistance value was detected, the insulation properties were evaluated as B.

### [Warpage]

The obtained thermoplastic adhesive sheet was visually inspected. A case where no warpage was observed was evaluated as A, a case where the sheet was slightly warped was evaluated as B, and a case where the sheet was significantly warped was evaluated as C.

### [Scratch load]

Using a variable-load friction and wear test system ("Tribo Gear HHS2000" manufactured by Shinto Scientific Co., Ltd.), the surface of the thermoplastic adhesive sheet was scratched with a sapphire scratching needle having an R of 0.1 mm at a speed of 1 mm/s and a load of 0 to 500 g while continuously increasing the load, and the load (g) at which the thermoplastic adhesive sheet started to break was measured. Here, the load at which the thermoplastic adhesive sheet started to break was a load at which breakage of the insulating reinforcing fibers of the thermoplastic adhesive sheet was observed. The measurement was performed three times, and the average value thereof was calculated.

### [Example 1]

A polyetherimide (hereinafter, sometimes abbreviated as PEI)-based polymer ("ULTEM 9001" manufactured by SABIC Innovative Plastics) as an amorphous thermoplastic resin was vacuum-dried at 150°C for 12 hours. The PEI-based polymer was extruded using an extruder and supplied to a melt-blown nonwoven fabric manufacturing apparatus equipped with a nozzle having a nozzle hole diameter D (diameter) of 0.4 mm, L/D = 7.5 (L: nozzle length), and a nozzle hole pitch of 0.68 mm, and air was blown at a single hole discharge rate of 0.2 g/min, a spinning temperature of 430°C, a hot air temperature of 450°C, and 10 Nm³/min per 1 m of the nozzle width to obtain a melt-blown nonwoven fabric. The obtained melt-blown nonwoven fabric had a basis weight of 35 g/m², a glass transition temperature (corresponding to the softening point of the amorphous thermoplastic resin) of 217°C, and a density of 1.27 g/cm³.

The obtained PEI melt-blown nonwoven fabric as a thermoplastic resin sheet and a glass cloth (basis weight: 12 g/m², thickness: 0.015 mm, glass fiber density: 2.54 g/cm³) as an insulating reinforcing-fiber sheet were used and stacked in the order of PEI melt-blown nonwoven fabric / glass cloth / PEI melt-blown nonwoven fabric. Using a test press machine ("KVHC-II" manufactured by Kitagawa Seiki Co., Ltd.), hot pressing was performed at 300°C and 2 MPa in the stacking direction for 1 minute to impregnate the molten PEI-based polymer between the glass fibers, thereby preparing a thermoplastic adhesive sheet. No warpage was observed in the obtained thermoplastic adhesive sheet.

The obtained thermoplastic adhesive sheet was subjected to various evaluations, and the evaluation results are shown in Table 1. The set temperatures of the test press machine and the hot air furnace during the preparation of the sample for measuring shear adhesion strength were 300°C and 320°C, respectively.

### [Example 2]

A thermoplastic adhesive sheet was prepared in the same manner as in Example 1, except that a glass cloth ("H25X104HE" manufactured by UNITIKA LTD.; basis weight: 24.5 g/m², thickness: 0.03 mm, glass fiber density: 2.54 g/cm³) was used as an insulating reinforcing-fiber sheet, and various evaluations were performed. No warpage was observed in the obtained thermoplastic adhesive sheet.

### [Example 3]

A thermoplastic adhesive sheet was prepared in the same manner as in Example 1, except that three pieces of the glass cloth used as an insulating reinforcing-fiber sheet in Example 2 were stacked and used, and various evaluations were performed. No warpage was observed in the obtained thermoplastic adhesive sheet.

### [Example 4]

A PEI melt-blown nonwoven fabric was obtained in the same manner as in Example 1, except that the basis weight thereof was adjusted to 25 g/m² in the production of the melt-blown nonwoven fabric. A thermoplastic adhesive sheet was prepared in the same manner as in Example 1, except that the obtained PEI melt-blown nonwoven fabric as a thermoplastic resin sheet and three pieces of the glass cloth used in Example 2 as an insulating reinforcing-fiber sheet, stacked together, were used, and various evaluations were performed. No warpage was observed in the obtained thermoplastic adhesive sheet.

### [Example 5]

A polyether ether ketone (hereinafter, sometimes abbreviated as PEEK)-based polymer ("90G" manufactured by Victrex plc.) as a crystalline thermoplastic resin was vacuum-dried at 80°C for 12 hours. Then, 0.35 g of the PEEK-based polymer was disposed inside a metal frame having an inner dimension of 100 mm × 100 mm × a thickness of 25 µm and placed on a polyimide film, and was pressed under conditions of 380°C, 2 MPa, 1 minute using a test press machine ("KVHC-II" manufactured by Kitagawa Seiki Co., Ltd.) to obtain a film. The obtained film had a basis weight of 33 g/m², a melting point (corresponding to the softening point of the crystalline thermoplastic resin) of 343°C, and a density of 1.30 g/cm³. A thermoplastic adhesive sheet was prepared in the same manner as in Example 1, except that the obtained PEEK film as a thermoplastic resin sheet and the glass cloth used in Example 2 as an insulating reinforcing-fiber sheet were used, and various evaluations were performed. No warpage was observed in the obtained thermoplastic adhesive sheet. The set temperatures of the test press machine and the hot air furnace during the preparation of the sample for measuring shear adhesion strength were 380°C and 380°C, respectively.

### [Example 6]

A phenoxy-based polymer ("Yp50s" manufactured by NIPPON STEEL Chemical & Material Co., Ltd.) as an amorphous thermoplastic resin was vacuum-dried at 60°C for 12 hours. The phenoxy-based polymer was extruded using an extruder and supplied to a melt-blown nonwoven fabric manufacturing apparatus equipped with a nozzle having a nozzle hole diameter D (diameter) of 0.3 mm, LID = 7.5 (L: nozzle length), and a nozzle hole pitch of 0.68 mm, and air was blown at a single hole discharge rate of 0.2 g/min, a spinning temperature of 350°C, a hot air temperature of 360°C, and 10 Nm³/min per 1 m of the nozzle width to obtain a melt-blown nonwoven fabric. The obtained melt-blown nonwoven fabric had a basis weight of 30 g/m², a glass transition temperature (corresponding to the softening point of the amorphous thermoplastic resin) of 84°C, and a density of 1.17 g/cm³.

The obtained phenoxy melt-blown nonwoven fabric as a thermoplastic resin sheet, and the glass cloth used in Example 2 as an insulating reinforcing-fiber sheet were used and stacked in the order of phenoxy melt-blown nonwoven fabric / glass cloth / phenoxy melt-blown nonwoven fabric. Using a test press machine ("KVHC-II" manufactured by Kitagawa Seiki Co., Ltd.), hot pressing was performed at 200°C and 2 MPa in the stacking direction for 1 minute to impregnate the molten phenoxy-based polymer between the glass fibers, thereby preparing a thermoplastic adhesive sheet. No warpage was observed in the obtained thermoplastic adhesive sheet. The set temperatures of the test press machine and the hot air furnace during the preparation of the sample for measuring shear adhesion strength were 200°C and 220°C, respectively.

### [Example 7]

A thermoplastic adhesive sheet was prepared in the same manner as in Example 1, except that the PEI melt-blown nonwoven fabric obtained in Example 1 as a thermoplastic resin sheet and the glass cloth used in Example 2 as an insulating reinforcing-fiber sheet were used and stacked in the order of two PEI melt-blown nonwoven fabrics / glass cloth, and various evaluations were performed. Significant warpage was observed in the obtained thermoplastic adhesive sheet.

### [Example 8]

A thermoplastic adhesive sheet was prepared in the same manner as in Example 1, except that the PEI melt-blown nonwoven fabric obtained in Example 1 as a thermoplastic resin sheet and the glass cloth used in Example 2 as an insulating reinforcing-fiber sheet were used and stacked in the order of two PEI melt-blown nonwoven fabrics / three pieces of glass cloth, and various evaluations were performed. Slight warpage was observed in the obtained thermoplastic adhesive sheet.

### [Example 9]

A thermoplastic adhesive sheet was prepared in the same manner as in Example 1, except that two pieces of the glass cloth used in Example 2 as an insulating reinforcing-fiber sheet were stacked and used, and various evaluations were performed. No warpage was observed in the obtained thermoplastic adhesive sheet.

### [Example 10]

A thermoplastic adhesive sheet was prepared in the same manner as in Example 1, except that the PEI melt-blown nonwoven fabric obtained in Example 1 as a thermoplastic resin sheet and the glass cloth used in Example 2 as an insulating reinforcing-fiber sheet were used and stacked in the order of one piece of glass cloth / two PEI melt-blown nonwoven fabrics / one piece of glass cloth, and various evaluations were performed. No warpage was observed in the obtained thermoplastic adhesive sheet.

### [Comparative Example 1]

A thermoplastic adhesive sheet was prepared in the same manner as in Example 1, except that the PEI melt-blown nonwoven fabric obtained in Example 4 as a thermoplastic resin sheet and five pieces of the glass cloth used in Example 2 as an insulating reinforcing-fiber sheet were used, and various evaluations were performed. No warpage was observed in the obtained thermoplastic adhesive sheet.

### [Comparative Example 2]

A thermoplastic adhesive sheet was prepared in the same manner as in Example 1, except that the glass cloth was not used, and various evaluations were performed. No warpage was observed in the obtained thermoplastic adhesive sheet.

### [Comparative Example 3]

A thermoplastic adhesive sheet was prepared in the same manner as in Example 1, except that the PEI melt-blown nonwoven fabric obtained in Example 4 as a thermoplastic resin sheet and the glass cloth used in Example 2 as an insulating reinforcing-fiber sheet were used and stacked in the order of two PEI melt-blown nonwoven fabrics / five pieces of glass cloth, and various evaluations were performed. No warpage was observed in the obtained thermoplastic adhesive sheet.

**[Table 1-1]**

| | Thermoplasfic resin | Insulating reinforcing-fiber sheet | Configuration of layered body | Basis weight of thermoplastic resin (g/m²) | Basis weight of insulating reinforcing-fiber sheet (g/m²) | Volume ratio of insulating reinforcing-fiber sheet (vol%) |
|---|---|---|---|---|---|---|
| Example 1 | PEI | Glass cloth | PEI/glass cloth/PEI | 70 | 12.0 | 7.9 |
| Example 2 | PEI | Glass cloth | PEI/glass cloth/PEI | 70 | 24.5 | 14.9 |
| Example 3 | PEI | Glass cloth | PEI/glass cloth/PEI | 70 | 73.5 | 34.4 |
| Example 4 | PEI | Glass cloth | PEI/glass cloth/PEI | 50 | 73.5 | 42.4 |
| Example 5 | PEEK | Glass cloth | PEEK/glass cloth/PEEK | 66 | 24.5 | 16.0 |
| Example 6 | Phenoxy | Glass cloth | Phenoxy/glass cloth/phcnoxy | 60 | 24.5 | 15.8 |
| Example 7 | PEI | Glass cloth | PEI/glass cloth | 70 | 24.5 | 14.9 |
| Example 8 | PEI | Glass cloth | PEI/glass cloth | 70 | 73.5 | 34.4 |
| Example 9 | PEI | Glass cloth | PEI/glass cloth/PEI | 70 | 49.0 | 25.9 |
| Example 10 | PEI | Glass cloth | Glass cloth/PEI/glass cloth | 70 | 49.0 | 25.9 |
| Comparative Example 1 | PEI | Glass cloth | PEI/glass cloth/PEI | 50 | 122.5 | 55.1 |
| Comparative Example 2 | PEI | - | PEI | 70 | - | - |
| Comparative Example 3 | PEI | Glass cloth | PEI/glass cloth | 50 | 122.5 | 55.1 |

**[Table 1-2]**

| | Thermoplastic resin | Insulating reinforcing-fiber sheet | Configuration of layered body | Theoretical thickness of thermoplastic adhesive sheet (µm) | Exposure rate of insulating reinforcing-fiber sheet (%) |
|---|---|---|---|---|---|
| Example 1 | PET | Glass cloth | PEI/glass cloth/PET | 59.8 | 0/0 |
| Example 2 | PEI | Glass cloth | PEI/glass cloth/PEI | 64.8 | 0/0 |
| Example 3 | PEI | Glass cloth | PEI/glass cloth/PEI | 84.1 | 0.8/0.3 |
| Example 4 | PEI | Glass cloth | PEI/glass cloth/PEI | 68.3 | 3.1/2.5 |
| Example 5 | PEEK | Glass cloth | PEEK/glass cloth/PEEK | 60.4 | 0/0 |
| Example 6 | Phenoxy | Glass cloth | Phenoxy/glass cloth/phenoxy | 60.9 | 0/0 |
| Example 7 | PEI | Glass cloth | PEI/glass cloth | 64.8 | 0/29.6 |
| Example 8 | PEI | Glass cloth | PEI/glass cloth | 84.1 | 0.3/30.1 |
| Example 9 | PEI | Glass cloth | PEI/glass cloth/PEI | 74.4 | 0.6/0.6 |
| Example 10 | PEI | Glass cloth | Glass cloth/PEI/glass cloth | 74.4 | 27.1/26.3 |
| Comparative Example 1 | PEI | Glass cloth | PEI/glass cloth/PEI | 87.6 | 14.8/11.6 |
| Comparative Example 2 | PEI | - | PEI | 55.1 | - |
| Comparative Example 3 | PEI | Glass cloth | PEI/glass cloth | 87.6 | 9.8/28.8 |

**[Table 1-3]**

| | Thermoplastic resin | Insulating reinforcing-fiber sheet | Configuration of layered body | Shear adhesion strength (MPa) | Insulation properties | Warpage | Scratch load (g) |
|---|---|---|---|---|---|---|---|
| Example 1 | PEI | Glass cloth | PEI/glass cloth/PEI | 24.1 | A | A | - |
| Example 2 | PET | Glass cloth | PEI/glass cloth/PEI | 27.8 | A | A | 300.0 |
| Example 3 | PEI | Glass cloth | PEI/glass cloth/PEI | 25.4 | A | A | - |
| Example 4 | PEI | Glass cloth | PEI/glass cloth/PEI | 25.0 | A | A | 89.9 |
| Example 5 | PEEK | Glass cloth | PEEK/glass cloth/PEEK | 22.7 | A | A | - |
| Example 6 | Phenoxy | Glass cloth | Phenoxy/glass cloth/phenoxy | 20.2 | A | A | - |
| Example 7 | PEI | Glass cloth | PEI/glass cloth | 27.1 | A | C | - |
| Example 8 | PEI | Glass cloth | PEI/glass cloth | 24.5 | A | B | - |
| Example 9 | PET | Glass cloth | PEI/glass cloth/PET | 27.1 | A | A | 218.2 |
| Example 10 | PEI | Glass cloth | Glass cloth/PEI/glass cloth | 19.3 | A | A | 68.6 |
| Comparative Example 1 | PEI | Glass cloth | PEl/glass cloth/PEI | 18.1 | A | A | 77.3 |
| Comparative Example 2 | PEI | - | PEI | 24.5 | B | A | - |
| Comparative Example 3 | PET | Glass cloth | PET/glass cloth | 2.5 | A | A | - |

Table 1 shows that the thermoplastic adhesive sheets of Examples 1 to 10 can bond the iron test pieces, which are adherends, to each other, exhibit high shear adhesion strength, and secure insulation properties. In particular, the thermoplastic adhesive sheets of Examples 1 to 6 and 9 do not warp because the exposure rate of the insulating reinforcing-fiber sheet on both surfaces is reduced. The thermoplastic adhesive sheets of Examples 2, 4, and 9 exhibit a high scratch load and are excellent in insertability into a narrow portion.

On the other hand, the thermoplastic adhesive sheets of Comparative Examples 1 and 3 cannot exhibit sufficient adhesiveness because the volume ratio of the insulating reinforcing-fiber sheet is too large, resulting in lower shear adhesion strength than that in Examples 1 to 10.

The thermoplastic adhesive sheet of Comparative Example 2 cannot suppress contact between the iron test pieces nor ensure insulation properties because it does not include an insulating reinforcing-fiber sheet.

### INDUSTRIAL APPLICABILITY

The thermoplastic adhesive sheet is useful for insulating and bonding adherends in transportation means, home electric appliances, industrial machines, buildings, and the like. For example, the thermoplastic adhesive sheet can be used as a fixing material for bonding and fixing permanent magnets in a plurality of holes formed in a rotor or a stator of a motor.

As described above, the preferred example of the present invention has been described with reference to the drawings. However, those skilled in the art will readily envision various changes and modifications within the scope of the present description. Accordingly, such changes and modifications are to be construed as being within the scope of this invention as defined by the appended claims.

### REFERENCE SIGNS LIST

- 11, 21: Thermoplastic adhesive sheet
- 12, 12', 22, 22': Adherend
- 23: Hole

## Claims

1. A thermoplastic adhesive sheet comprising a thermoplastic resin and an insulating reinforcing-fiber sheet, the thermoplastic adhesive sheet having an adhesive surface to be bonded with the thermoplastic resin, wherein a volume ratio of the insulating reinforcing-fiber sheet relative to a total volume of the thermoplastic resin and the insulating reinforcing-fiber sheet is 2 to 50 vol%.

2. The thermoplastic adhesive sheet according to claim 1, wherein both surfaces of the thermoplastic adhesive sheet are adhesive surfaces, and an exposure rate of the insulating reinforcing-fiber sheet on each of the adhesive surfaces is less than 10%.

3. The thermoplastic adhesive sheet according to claim 1 or 2, wherein the insulating reinforcing-fiber sheet is a glass fiber woven fabric.

4. The thermoplastic adhesive sheet according to claim 1 or 2, wherein a thickness of the insulating reinforcing-fiber sheet is 10 to 150 µm.

5. The thermoplastic adhesive sheet according to claim 1 or 2, wherein a mass per unit area Mf of the insulating reinforcing-fiber sheet is 10 to 79 g/m², and a theoretical thickness T represented by the following formula (1) is 20 to 150 µm: $T = Mp / σp + Mf / σf$ (1) wherein T is the theoretical thickness [µm], Mp is a mass per unit area [g/m²] of the thermoplastic resin, σp is a density [g/cm³] of the thermoplastic resin, Mf is a mass per unit area [g/m²] of the insulating reinforcing-fiber sheet, and σf is a density [g/cm³] of the insulating reinforcing fiber.

6. The thermoplastic adhesive sheet according to claim 1 or 2, wherein a glass transition temperature of the thermoplastic resin is 100°C or higher.

7. The thermoplastic adhesive sheet according to claim 1 or 2, wherein the thermoplastic resin is an amorphous thermoplastic resin.

8. The thermoplastic adhesive sheet according to claim 1 or 2, wherein the thermoplastic resin is at least one thermoplastic resin selected from the group consisting of a polyetherimide-based resin, a polyether ether ketone-based resin, a phenoxy-based resin, and a polycarbonate-based resin.

9. An adhesive structure comprising: the thermoplastic adhesive sheet according to claim 1 or 2; and an adherend integrated in contact with at least a part of the adhesive surface of the thermoplastic adhesive sheet.

10. A method of using the thermoplastic adhesive sheet according to claim 1 or 2, the method comprising: interposing the thermoplastic adhesive sheet between adherends; and heating the thermoplastic adhesive sheet at a temperature equal to or higher than a softening point of the thermoplastic resin while applying a pressure in a stacking direction of the thermoplastic adhesive sheet from at least one of the adherends to bond the adherends to each other.

11. The method according to claim 10, wherein one thermoplastic adhesive sheet is interposed between the adherends.
